(19) **Europäisches Patentamt / European Patent Office / Office européen des brevets**

(11) **EP 4 550 213 A1**

(12) # EUROPEAN PATENT APPLICATION

(43) Date of publication:
07.05.2025 Bulletin 2025/19

(21) Application number: 24209530.5

(22) Date of filing: 29.10.2024

(51) International Patent Classification (IPC):
**G06N 3/0464** (2023.01)   **G06N 3/063** (2023.01)

(52) Cooperative Patent Classification (CPC):
**G06N 3/063; G06N 3/045; G06N 3/0464; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 CN 202311422409**

(71) Applicant: **Beijing Horizon Information Technology Co., Ltd.**
**Beijing 100094 (CN)**

(72) Inventor: **ZHU, Haiyang**
**Beijing, 100094 (CN)**

(74) Representative: **Kolster Oy Ab**
**Salmisaarenaukio 1**
**P.O. Box 204**
**00181 Helsinki (FI)**

(54) **INSTRUCTION GENERATION METHOD, APPARATUS, STORAGE MEDIUM AND ELECTRONIC DEVICE**

(57) Disclosed are an instruction generation method and apparatus and an electronic device. The method includes: determining first parameter information of a memory transfer operator and a first memory layout corresponding to input feature data; determining a second memory layout supported by a hardware unit executing the memory transfer operator; in response to that the first memory layout is different from the second memory layout, determining whether the first memory layout meets a rearrangement condition; and in response to that the first memory layout meets the rearrangement condition, generating an executable instruction for the neural network processor based on the first parameter information, the first memory layout, and the second memory layout. According to technical solutions of this disclosure, the input feature data can be accessed according to a memory layout supported by the neural network processor, without designing an additional memory layout conversion instruction, thereby reducing instruction overhead.

**FIG.3**

301 — Determining first parameter information of a memory transfer operator and a first memory layout corresponding to input feature data

302 — Determining a second memory layout supported by a hardware unit executing the memory transfer operator

303 — In response to that the first memory layout is different from the second memory layout, determining whether the first memory layout meets a rearrangement condition

304 — In response to that the first memory layout meets the rearrangement condition, generating an executable instruction for a neural network processor based on the first parameter information, the first memory layout, and the second memory layout

# EP 4 550 213 A1

**Description**

## FIELD OF THE INVENTION

This disclosure relates to the technical field of integrated circuits, and in particular, to an instruction generation method and apparatus and an electronic device.

## BACKGROUND OF THE INVENTION

Usually, for a neural network processor, operands of instructions have a specific memory layout. For example, taking that a to-be-processed instruction is an operation instruction corresponding to a memory transfer operator as an example, a memory layout of an operand of the memory handling operator is 2W4C. When the to-be-processed instruction is executed by the neural network processor, it is needed to read the operand from a memory according to the memory layout supported by the neural network processor, so as to process the operand.

## SUMMARY OF THE INVENTION

Generally, operands of an instruction only support one or a few memory layouts. During execution of the instruction, if it is found that the memory layout corresponding to the operands of the instruction (that is, input feature data that needs to be processed through the instruction) is inconsistent with a memory layout supported by a neural network processor, a memory layout conversion instruction needs to be set in advance to convert the memory layout of the operand to the memory layout supported by the neural network processor. However, this processing manner requires relatively long time and may reduce processing efficiency of the neural network processor.

To resolve the foregoing technical problem, this disclosure is proposed. Embodiments of this disclosure provide an instruction generation method and apparatus and an electronic device. When generating an executable instruction for the neural network processor, the memory layout of the operands may be regarded as the memory layout supported by the neural network processor. Thus, there is no need to convert the memory layout of the input feature data by using the memory layout conversion instruction, so as to improve processing efficiency of the neural network processor.

According to an aspect of this disclosure, an instruction generation method for a neural network processor is provided, including: determining first parameter information of a memory transfer operator and a first memory layout corresponding to input feature data; determining a second memory layout supported by a hardware unit executing the memory transfer operator; in response to that the first memory layout is different from the second memory layout, determining whether the first memory layout meets a rearrangement condition; and in response to that the first memory layout meets the rearrangement condition, generating an executable instruction for the neural network processor based on the first parameter information, the first memory layout, and the second memory layout.

Based on this scheme, the first memory layout corresponding to the input feature data and the second memory layout supported by the hardware unit are first determined. When the first memory layout is different from the second memory layout, it is determined whether the first memory layout meets the rearrangement condition. When the first memory layout meets the rearrangement condition, the executable instruction is generated for the neural network processor by using the first parameter information, the first memory layout, and the second memory layout. Because the first memory layout is different from the second memory layout, it is needed to determine whether the first memory layout can be rearranged. The executable instruction can be generated by using the first parameter information, the first memory layout, and the second memory layout merely when the first memory layout meets the rearrangement condition. The neural network processor may transfer the input feature data according to the second memory layout by executing the executable instruction.

According to an aspect of this disclosure, a method for processing input feature data through a neural network processor is provided, including: determining an executable instruction sequence for processing the input feature data; and transferring the input feature data based on the executable instruction sequence to obtain transferred data.

Based on this scheme, the transferred data is obtained by determining the executable instruction sequence and transferring the input feature data based on the executable instruction sequence. In this way, the input feature data can be transferred according to the memory layout supported by the neural network processor, which improves processing efficiency of the neural network processor for the input feature data.

According to an aspect of this disclosure, an instruction generation apparatus for a neural network processor is provided, including: a first determining module, configured to determine first parameter information of a memory transfer operator and a first memory layout corresponding to input feature data; a second determining module, configured to determine a second memory layout supported by a hardware unit executing the memory transfer operator; a third determining module, configured to determine whether the first memory layout meets a rearrangement condition in response to that the first memory layout is different from the second memory layout; and an instruction generation module, configured to generate an executable instruction for the neural network processor based on the first parameter information, the first memory layout, and the second memory layout in response to that the first memory layout meets the rearrangement condition.

According to an aspect of this disclosure, an apparatus for processing input feature data through a neural network processor is provided, including: a determining module, configured to determine an executable instruction sequence for processing the input feature data; and a processing module, configured to transfer the input feature data based on the executable instruction sequence to obtain transferred data.

According to an aspect of this disclosure, there is provided a computer readable storage medium storing thereon a computer program, and the computer program is used for implementing any method described above.

According to an aspect of this disclosure, an electronic device is provided. The electronic device includes: a processor; and a memory for storing processor-executable instructions, where the processor is configured to read the executable instructions from the memory, and execute the instructions to implement any data processing method described above.

## BRIEF DESCRIPTION OF THE DRAWINGS

FIG. 1 is a schematic diagram of a structure of an electronic device according to an exemplary embodiment of this disclosure;

FIG. 2 is a schematic diagram of a structure of another electronic device according to an exemplary embodiment of this disclosure;

FIG. 3 is a schematic flowchart of an instruction generation method for a neural network processor according to an exemplary embodiment of this disclosure;

FIG. 4 is a schematic diagram of data transferring according to an exemplary embodiment of this disclosure;

FIG. 5 is another schematic flowchart of an instruction generation method for a neural network processor according to an exemplary embodiment of this disclosure;

FIG. 6 is still another schematic flowchart of an instruction generation method for a neural network processor according to an exemplary embodiment of this disclosure;

FIG. 7 is a further schematic flowchart of an instruction generation method for a neural network processor according to an exemplary embodiment of this disclosure;

FIG. 8 is a still furter schematic flowchart of an instruction generation method for a neural network processor according to an exemplary embodiment of this disclosure;

FIG. 9 is further another schematic flowchart of an instruction generation method for a neural network processor according to an exemplary embodiment of this disclosure;

FIG. 10 is still furter another schematic flowchart of an instruction generation method for a neural network processor according to an exemplary embodiment of this disclosure;

FIG. 11 is a schematic flowchart of a method for processing input feature data through a neural network processor according to an exemplary embodiment of this disclosure;

FIG. 12 is another schematic flowchart of a method for processing input feature data through a neural network processor according to an exemplary embodiment of this disclosure;

FIG. 13 is still another schematic flowchart of a method for processing input feature data through a neural network processor according to an exemplary embodiment of this disclosure;

FIG. 14 is a further schematic flowchart of a method for processing input feature data through a neural network processor according to an exemplary embodiment of this disclosure;

FIG. 15 is a diagram of a structure of an instruction generation apparatus for a neural network processor according to an exemplary embodiment of this disclosure;

FIG. 16 is a diagram of a structure of an apparatus for processing input feature data through a neural network processor according to an exemplary embodiment of this disclosure; and

FIG. 17 is a diagram of a structure of an electronic device according to an exemplary embodiment of this disclosure.

## DETAILED DESCRIPTION OF THE EMBODIMENTS

Exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments described herein.

Application overview

A neural network processor needs to first read operands from a memory when executing an instruction, so as to perform instruction operations on the operands. For example, taking that the instruction is to calculate a sum of a and b as an example, operands of this instruction is a and b. Usually, the operands of each instruction may be stored according to a specific memory layout. When executing the instruction, the neural network processor may operate on the operands according to a memory layout supported by the neural network processor, for example, read, perform operations on, and write the operands according to the memory layout supported by the neural network processor.

If the memory layout of the operands is inconsistent with a memory layout supported by the neural network processor, the neural network processor needs to insert a memory layout conversion instruction in advance, so as to convert the memory layout of the operands into the memory layout supported by the neural network processor. However, use of the memory layout conversion instruction may increase performance overhead of the neural network processor, which results in a decrease in overall performance of the neural network processor. Moreover, converting the memory layout of the operands by using the memory layout conversion instruction also requires a certain amount of time, which may reduce processing efficiency of the neural network processor.

Exemplary device

Embodiments of this disclosure relate to a compilation-side device and a running-side device. The compilation-side device is configured to generate executable instructions for a neural network processor. The running-side device is configured to perform operations on a neural network by running the instructions provided by the compilation-side device. These operations include, but are not limited to: a convolution operation, a pooling operation, and a memory transfer operation.

In some embodiments, the compilation-side device may include, but is not limited to a personal computer, a server computer, a multi-processor system, and a microprocessor-based system.

In some embodiments, the running-side device may include, but is not limited to a neural network processor or a neural network chip.

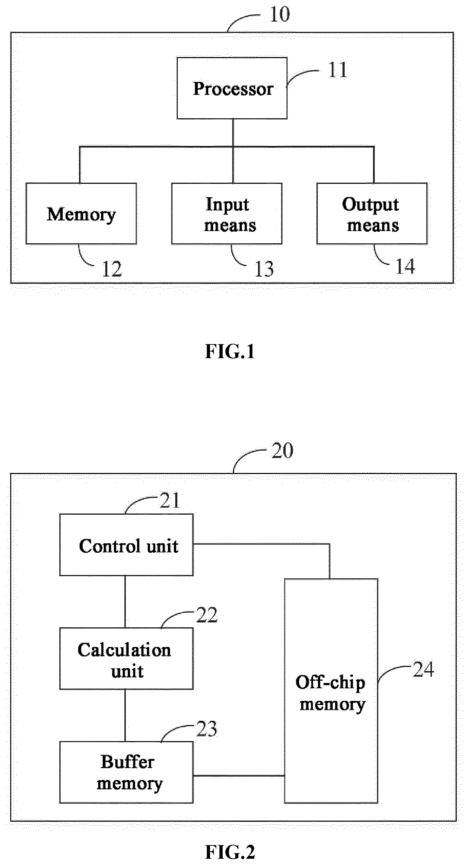

FIG. 1 is a schematic diagram of a structure of a compilation-side device 10 according to an embodiment of this disclosure. As shown in FIG. 1, the compilation-side device 10 includes at least one processor 11 and a memory 12.

The processor 11 is configured to implement an instruction generation method for a neural network processor according to the embodiments of this disclosure. The processor 11 may be a processor that supports instruction sequence compilation for the neural network, or another form of processing unit having a compilation processing capability and/or an instruction execution capability.

The memory 12 may include one or more computer program products, which may include various forms of computer readable storage media. One or more computer program instructions may be stored on the computer readable storage medium. The processor 11 may execute program instructions to implement the instruction generation method for a neural network processor that is described below.

In some embodiments, as shown in FIG. 1, the compilation-side device 10 may further include an input means 13 and an output means 14. The input means 13 may include, for example, a keyboard and a mouse, for a compiler to input parameters of the neural network, such as a size of an input feature map, a size of an output feature map, and a convolution kernel at each layer of the neural network. The output means 14 may include, for example, a display, a speaker, a printer, a communication network, and a remote output device connected by the communication network, for the compiler to view a final compilation result or intermediate data during a compilation process.

It should be noted that a specific structure of the compilation-side device 10 is not limited in the embodiments of this disclosure. The compilation-side device 10 may include more or fewer components than those shown in FIG. 1. For example, the compilation-side device 10 may further include a bus, an input/output interface, and other components.

FIG. 2 is a schematic diagram of a structure of another running-side device 20 according to an embodiment of this disclosure. As shown in FIG. 2, the running-side device 20 may include a control unit 21 and a calculation unit 22. The control unit 21 is configured to execute instructions to control the calculation unit 22 to implement the following method for processing a multidimensional array through a neural network processor.

In some embodiments, the running-side device 20 may further include a buffer memory 23 and an off-chip memory 24. The buffer memory 23 may include one or more independent cache memories or a processing unit having a data caching capability, and may access the off-chip memory 24 under control of the control unit 21. The off-chip memory 24 may include one or more independent memories or a processing unit having a data storage capability, and may be accessed by the buffer memory 23 under control of the control unit 21.

It should be noted that a specific structure of the running-side device 20 is not limited in the embodiments of this disclosure. The running-side device 20 may include more or fewer components than those shown in FIG. 2. For example, the running-side device 20 may further include a bus and other components.

Exemplary methods

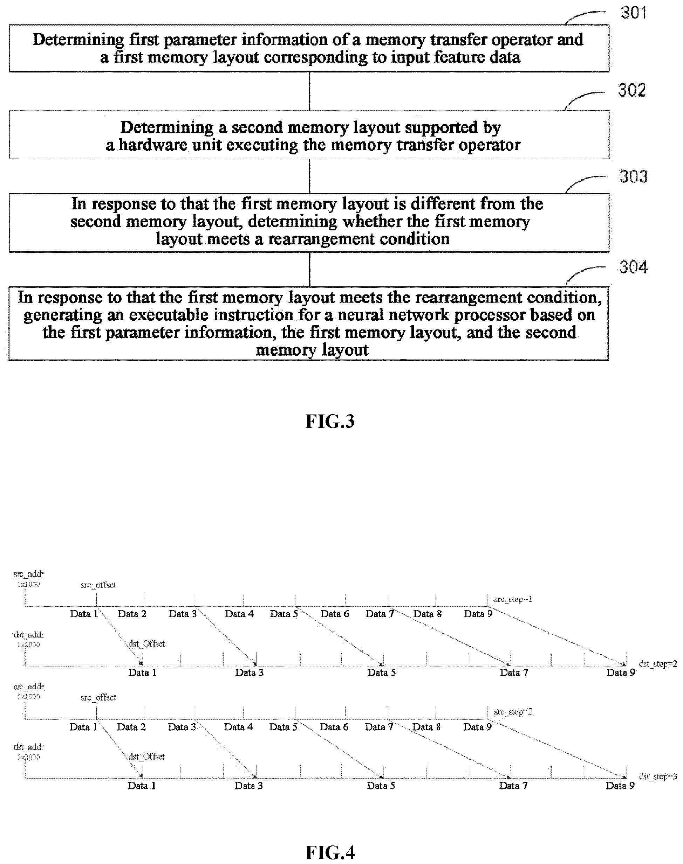

FIG. 3 shows an instruction generation method for a neural network processor according to an embodiment of this disclosure. The method may be applied to a compilation-side device. As shown in FIG. 3, the method includes the following steps 301 to 304.

Step 301. Determining first parameter information of a memory transfer operator and a first memory layout corresponding to input feature data.

The memory transfer operator involves a plurality of parameters. The first parameter information is information corresponding to the parameters of the memory transfer operator.

For example, the parameters of the memory transfer operator includes src_addr, src_offset, src_step, dst_addr, dst_offset, dst step, and transfer_size.

The src_addr refers to a source address, that is, a location where pre-transfer data is located. The src_offset refers to an additional offset value relative to the source address, that is, offset of the pre-transfer data in the source address. The src_step refers to a hop count on the source address. To be specific, data is copied at certain intervals during an actual transfer process. The transfer_size refers to an amount of data copied.

The dst_addr refers to a destination address, that is, a location where transferred data is located. The dst_offset refers to an additional offset value relative to the destination address, that is, offset of the transferred data in the destination address. The dst_step refers to a hop count on the destination address. To be specific, during the actual transfer process, the pre-transfer data is copied onto the destination address at certain intervals.

Solutions provided in embodiments of this disclosure are described below by using an example in which the src_addr in the memory transfer operator is 0x1000, the src_offset is 10, the src_step is 1, the dst_addr is 0x2000, the dst_offset is 20, the dst_step is 2, and the transfer_size=5.

As shown in FIG. 4, a memory transfer instruction may start from the src_addr location plus the src_offset location, with the src_step as an interval. Because the transfer_size is 5, it is needed to traverse 4 times by using src_step to obtain 5 pieces of pre-transfer data from the src_addr location plus the src_offset location and from a later location, and transfer the 5 pieces of pre-transfer to the corresponding destination address. For example, if data corresponding to the src_addr location plus the src_offset location is data 1, the pre-transfer data is data 1, data 3, data 5, data 7, and data 9.

Subsequently, the destination address corresponding to the pre-transfer data is determined. The destination address starts from the dst_addr location plus the dst_offset location, with the dst_step as an interval. Because the transfer_size is 5, it is needed to traverse 4 times by using the dst_step to determine 5 destination addresses from the dst_addr location plus the dst_offset location and from a later location, and transfer the pre-transfer data (that is, the data 1, the data 3, the data 5, the data 7, and the data 9) to the 5 destination addresses, respectively. The 5 destination addresses after the transfer are shown in FIG. 4.

It may be learned from the foregoing memory transfer process that, if a coordinate of data involved in the transfer process is represented by using an index [i, j, k], the memory transfer process satisfies the following expression:

$$\mathrm{dst\_ddr}[\mathrm{dst\_offset} + \mathrm{index}[\mathrm{i, j, k}] * \mathrm{dst\_step}] = \mathrm{src\_ddr}[\mathrm{src\_offset} + \mathrm{index}[\mathrm{i, j, k}] * \mathrm{src\_step}]$$

It may be understood that the pre-transfer data is determined by the src_addr, the src_offset, the src_step, and the transfer size, and a location where the pre-transfer data needs to be moved is determined by the dst_addr, the dst offset, and the dst_step. Through the foregoing parameters, the memory transfer instruction may be to transfer and copy data between different memory locations according to a certain rule, thus making data transfer more flexible.

Generally, the memory transfer operator is an operator in a neural network model. The neural network model may include a plurality of function operators, such as a convolution operator, a pooling operator, and the memory transfer operator. The memory transfer operator may be connected to other function operators, and the input feature data is output feature data of the other operators. In some examples, the first memory layout corresponding to the input feature data may be a current memory layout corresponding to the output feature data of the other operators.

For example, the neural network model includes the convolution operator and the memory transfer operator. The convolution operator is connected to the memory transfer operator, and output feature data of the convolution operator is input feature data of the memory transfer operator. A memory layout supported by a hardware unit executing the convolution operator may be same as or different from a memory layout supported by a hardware unit executing the memory transfer operator. If the memory layout supported by the hardware unit executing the convolution operator is different from the memory layout supported by the hardware unit executing the memory transfer operator, the memory layout of the input feature data is not the memory layout supported by the hardware unit executing the memory transfer operator.

For example, if the memory layout supported by the hardware unit executing the memory transfer operator is 4W2C and the memory layout supported by the hardware unit executing the convolution operator is 2W4C, a memory layout corresponding to the output feature data of the convolution operator is 2W4C. Further, because the output feature data of the convolution operator is the input feature data of the memory transfer operator, the first memory layout corresponding to the input feature data is 2W4C. In view of the above, the first memory layout of the input feature data is not the memory layout supported by the hardware unit executing the memory transfer operator.

The memory layout is described in detail below. For example, W and C dimensions of a multidimensional array respectively are 4 and 5. When a layout of a multidimensional array [4, 5] is 2W4C, a layout of the multidimensional array in a memory is shown in Table 1.

Table 1

| block 1 | W0C0 | W0C1 | W0C2 | W0C3 | W1C0 | W1C1 | W1C2 | W1C3 |
|---------|------|------|------|------|------|------|------|------|
| block 2 | W0C4 |      |      |      | W1C4 |      |      |      |
| block 3 | W2C0 | W2C1 | W2C2 | W2C3 | W3C0 | W3C1 | W3C2 | W3C3 |
| block 4 | W2C0 |      |      |      | W3C4 |      |      |      |

When the multidimensional array [4, 5] is arranged according to the memory layout, a number of blocks corresponding to the layout 2W4C of [4, 5] may be determined first; and then elements in each block are determined, so as to obtain the layout of [4, 5] in the memory. It may be learned from Table 1 that when the layout of [4, 5] is 2W4C, there are 4 corresponding blocks, which respectively are a block 1, a block 2, a block 3, and a block 4. There are 8 elements in each one of the 4 blocks. Blank parts in Table 1 represent invalid data. Due to invalid data in Table 1, an amount of data aligned according to the layout may be larger than actual valid data.

Step 302. Determining a second memory layout supported by a hardware unit executing the memory transfer operator.

The hardware unit executing the memory transfer operator is a hardware unit in the neural network processor.

The neural network processor is a device used to process a large amount of computing tasks in artificial intelligence applications. Although a processor (such as a CPU) has a certain data processing capability, for specific processing tasks, such as image processing and speech processing, the CPU has low execution efficiency and poor execution effects. Therefore, the neural network processor is required to perform the foregoing specific data operations.

For example, the neural network processor may be any accelerator capable of performing tensor operations. For example, the neural network processor may be a brain processing unit (BPU) or a neural network processing unit (NPU). The neural network processors may specifically include various types such as a graphics processing unit (GPU), a field-programmable gate array (FPGA), and an application-specific integrated circuit (ASIC). The neural network processors may be a homogeneous accelerator or a heterogeneous accelerator. Optionally, a type and a structure of the neural network processor are not specifically limited in the embodiments of the present invention. Exemplary description is made in the following embodiments by using an example in which the neural network processor is a BPU.

In some embodiments, a compilation-side device is used to compile and optimize operations of the memory transfer operator, so that the memory transfer operator operates efficiently on the neural network processor. The compilation-side device may obtain the second memory layout supported by the hardware unit executing the memory transfer operator in the neural network processor in advance, so as to compile and optimize the memory transfer operator according to the second memory layout. For example, the second memory layout supported by the hardware unit executing the memory transfer operator is 2W4C.

Step 303. In response to that the first memory layout is different from the second memory layout, determining whether the first memory layout meets a rearrangement condition.

In some embodiments, the first memory layout corresponding to the input feature data may be same as or different from the second memory layout supported by the hardware unit executing the memory transfer operator.

When the first memory layout is same as the second memory layout, it indicates that the first memory layout is a memory layout supported by the hardware unit. In this case, a compilation-side device may directly compile and optimize the operations of the memory transfer operator.

When the first memory layout is different from the second memory layout, it indicates that the first memory layout is not a memory layout supported by the hardware unit. In this case, the the compilation-side device cannot directly compile and optimize the operations of the memory transfer operator.

When the first memory layout is different from the second memory layout, it may be further determined whether the first memory layout meets the rearrangement condition. When it is determined that the first memory layout meets the rearrangement condition, second parameter information is obtained based on the first parameter information. Subsequently, the second parameter information may be used to compile and optimize the operations of the memory transfer operator. This is equivalent to accessing the input feature data according to the second memory layout, thereby avoiding introduction of a memory layout conversion instruction and improving processing efficiency of the neural network processor. When it is determined that the first memory layout does not meet the rearrangement condition, it is needed to use the memory layout conversion instruction to convert the first memory layout corresponding to the input feature data into the second memory layout supported by the hardware unit executing the memory transfer operator.

Step 304. In response to that the first memory layout meets the rearrangement condition, generating an executable instruction for the neural network processor based on the first parameter information, the first memory layout, and the second memory layout.

The compilation-side device in the embodiments of this disclosure fully considers the first parameter information of the memory transfer operator, the first memory layout corresponding to the input feature data, and the second memory layout supported by the hardware unit executing the memory transfer operator when generating the executable instruction for the neural network processor. Therefore, the input feature data can be accessed through the generated executable instruction according to a memory layout (that is, the second memory layout) supported by the neural network processor. In other words, according to this disclosure, the neural network processor may be enabled to access the input feature data according to the memory layout supported by the neural network processor without adding the memory layout conversion instruction, thereby improving the processing efficiency of the neural network processor.

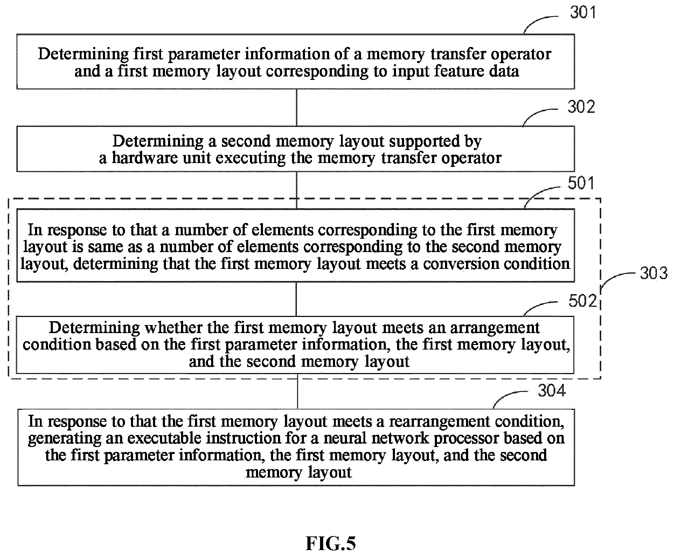

In some embodiments, as shown in FIG. 5, step 303 of determining whether the first memory layout meets the rearrangement condition may include steps 501 and 502.

Step 501. In response to that a number of elements corresponding to the first memory layout is same as a number of elements corresponding to the second memory layout, determining that the first memory layout meets a conversion condition.

The rearrangement condition includes the conversion condition and an arrangement condition.

When it is determined that the first memory layout is different from the second memory layout, it may be further determined whether the first memory layout can be converted into the second memory layout, so that the neural network processor accesses the input feature data according to the second memory layout.

In some examples, determining whether the first memory layout can be converted into the second memory layout is specifically to determine whether the first memory layout meets the rearrangement condition. Since the rearrangement condition includes the conversion condition and the arrangement condition, it may be first determined whether the first memory layout meets the conversion condition, and then whether the first memory layout meets the arrangement condition may be further determined. When the first memory layout does not meet the conversion condition, it indicates that the first memory layout does not meet the rearrangement condition.

Determining whether the first memory layout meets the conversion condition is specifically to determine whether the number of elements corresponding to the first memory layout is same as the number of elements corresponding to the second memory layout. When the number of elements corresponding to the first memory layout is same as the number of elements corresponding to the second memory layout, it indicates that the first memory layout meets the conversion condition. When the number of elements corresponding to the first memory layout is different from the number of elements corresponding to the second memory layout, it indicates that the first memory layout does not meet the conversion condition or the rearrangement condition.

For example, if the first memory layout is 4W2C, the number of elements corresponding to the first memory layout is 4 * 2=8. If the second memory layout is 2W4C, the number of elements corresponding to the second memory layout is 2 * 4=8. In view of the above, if the number of elements corresponding to the first memory layout is same as the number of elements corresponding to the second memory layout, the first memory layout meets the conversion condition.

Step 502. Determining whether the first memory layout meets an arrangement condition based on the first parameter information, the first memory layout, and the second memory layout.

When the first memory layout meets the conversion condition, it may be further determined whether the first memory layout meets the arrangement condition. The first memory layout can be converted into the second memory layout merely when the first memory layout meets the arrangement condition, so that the input feature data is accessed according to the second memory layout.

In the embodiments of this disclosure, when it is determined that the first memory layout is different from the second memory layout, it may be further determined whether the first memory layout meets the conversion condition and the arrangement condition in the rearrangement condition. To be specific, according to this disclosure, a special case where the first memory layout corresponding to the input feature data is different from the second memory layout supported by the hardware unit is further processed by determining whether the first memory layout meets the rearrangement condition, thereby efficiently utilizing a processing capability of the neural network processor and improving data processing efficiency.

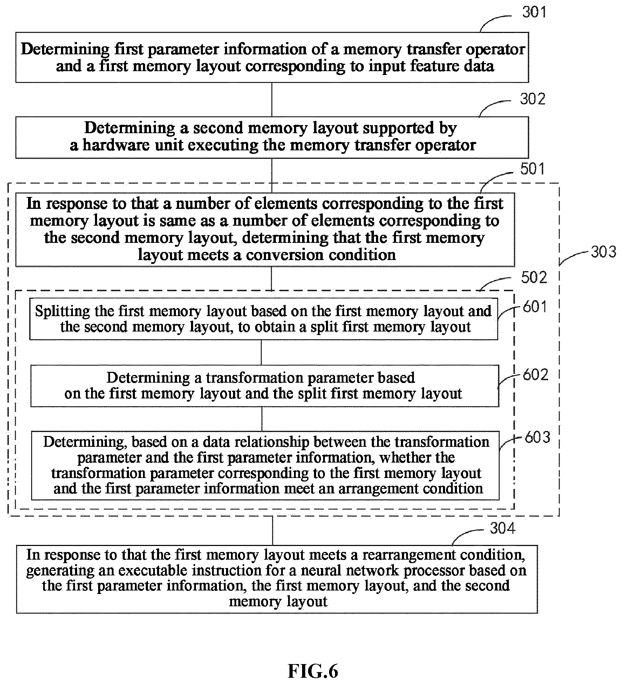

In some embodiments, as shown in FIG. 6, step 502 may include steps 601 to 603.

Step 601. Splitting the first memory layout based on the first memory layout and the second memory layout, to obtain a split first memory layout.

Splitting the first memory layout based on the first memory layout and the second memory layout may be splitting the first memory layout based on a minimum value of various dimensions in the first memory layout and the second memory layout.

For example, the first memory layout is 4W2C, and the second memory layout is 2W4C. Based on 4W in the first memory layout and 2W in the second memory layout, it may be learned that a minimum value in a W dimension is 2W. Splitting the first memory layout based on 2W may be splitting 4W in the first memory layout into 2W02W1. Based on 2C in the first memory layout and 4C in the second memory layout, it may be learned that a minimum value in a C dimension is 2C. Due to the minimum value of 2C, the first memory layout does not need to be further split in the C dimension. Therefore, the first memory layout is split to obtain a split first memory layout 2W02W12C.

In combination with the foregoing splitting mode, the second memory layout may also be split. Due to the minimum value of 2W in the W dimension, the second memory layout does not need to be further split in the W dimension. Due to the minimum value of 2C in the C dimension, splitting the second memory layout based on 2C may be splitting 4C in the second memory layout into 2C02C1. Therefore, a split second memory layout obtained by splitting the second memory layout is 2W2C02C1.

Step 602. Determining a transformation parameter based on the first memory layout and the split first memory layout.

After the split first memory layout is obtained, the transformation parameter may be determined based on the first memory layout and the split first memory layout. The transformation parameter may be represented by using f.

In some examples, it is assumed that the first memory layout is aXbY. Because only an outermost layer in the layout is a dimension where the memory transfer instruction occurs, no matter how many other dimensions exist later, no transfer occurs. Therefore, for the memory transfer instruction, only the outermost dimension is considered. Therefore, X represents the dimension where the memory transfer instruction occurs, and Y represents another dimension. a represents a value corresponding to the X dimension, and b represents a value corresponding to the Y dimension.

The split first memory layout obtained by splitting the first memory layout aXbY may be a0X0a1X1bY, and the transformation parameter satisfies f=a/a0. For example, if the first memory layout is 4W2C and the split first memory layout is 2W02W12C, the transformation parameter satisfies f=a/a0=4/2=2.

Step 603. Determining, based on a data relationship between the transformation parameter and the first parameter information, whether the transformation parameter corresponding to the first memory layout and the first parameter information meet the arrangement condition.

In some examples, the data relationship between the transformation parameter and the first parameter information includes a data relationship between the transformation parameter and the src_offset in the first parameter information, a data relationship between the transformation parameter and the dst_offset in the first parameter information, a data relationship between the transformation parameter and the src_step in the first parameter information, and a data relationship between the transformation parameter and the dst_step in the first parameter information. When the data relationship between the transformation parameter and the first parameter information meets requirements, it is considered that the transformation parameter corresponding to the first memory layout and the first parameter information meet the arrangement condition.

According to the embodiments of this disclosure, when it is determined that the first memory layout meets the arrangement condition in the rearrangement condition, the first memory layout is first split; and then the transformation parameter is obtained based on the split first memory layout; and finally, based on the data relationship between the transformation parameter and the first parameter information, it is determined that the first memory layout meets the arrangement condition. When the first memory layout meets the arrangement condition, it indicates that the first memory layout may be converted into the memory layout supported by the neural network processor. In this way, there is no need to introduce the memory layout conversion instruction, thereby improving the processing efficiency of the neural network processors.

In some embodiments, as shown in FIG. 6, step 603 may include steps 701 to 703.

Step 701. In response to that offset of a first source address in the first parameter information is an integer multiple of the transformation parameter, determining that the transformation parameter and the offset of the first source address meet a first sub-arrangement condition.

The arrangement condition includes the first sub-arrangement condition, a second sub-arrangement condition, and a third sub-arrangement condition.

When the transformation parameter corresponding to the first memory layout and the first parameter information respectively meet the first sub-arrangement condition, the second sub-arrangement condition, and the third sub-arrangement condition, it is considered that the transformation parameter corresponding to the first memory layout and the first parameter information meet the arrangement condition.

In some examples, when transformation parameter and the first parameter information meeting the first sub-arrangement condition refers to that the offset of the first source address in the first parameter information is an integer multiple of the transformation parameter, it is considered that the transformation parameter and the offset of the first source address meet the first sub-arrangement condition.

For example, the first sub-arrangement condition may be represented according to the following expression:

$$mod=(src\_offset, f)=0$$

Step 702. In response to that offset of a first destination address in the first parameter information is an integer multiple of the transformation parameter, determining that the transformation parameter and the offset of the first destination address meet a second sub-arrangement condition.

In some examples, when the transformation parameter and the first parameter information meeting the second sub-arrangement condition refers to that the offset of the first destination address in the first parameter information is an integer multiple of the transformation parameter, it is considered that the transformation parameter and the offset of the first destination address meet the second sub-arrangement condition.

For example, the second sub-arrangement condition may be represented according to the following expression:

$$mod=(dst\_offset, f)=0$$

Step 703. In response to that the transformation parameter is a first preset value, determining that the transformation parameter meets a third sub-arrangement condition; or in response to that a hop count of the first source address in the first parameter information is a second preset value and a hop count of the first destination address in the first parameter information is a third preset value, determining that the transformation parameter, the hop count the first source address and the hop count the first destination address meet the third sub-arrangement condition.

In some examples, that the transformation parameter and the first parameter information meet the third sub-arrangement condition refers to that the transformation parameter is the first preset value. Alternatively, when the hop count of the first source address in the first parameter information is the second preset value and the hop count of the first destination address in the first parameter information is the third preset value, it is considered that the transformation parameter, the hop count of the first source address, and the hop count of the first destination address meet the third sub-arrangement condition. For example, the first preset value, the second preset value, and the third preset value may all be 1. The first preset value, the second preset value, and the third preset value may also be other numerical values, which is subject to actual application.

For example, the third sub-arrangement condition may be represented according to the following expression:

$$f=1 or (src\_step=1, dst\_step=1)$$

The processing of determining, based on the data relationship between the transformation parameter and the first parameter information, that the transformation parameter corresponding to the first memory layout and the first parameter information meet the arrangement condition is described in detail in the embodiments of this disclosure, which provides a data basis for converting the first memory layout into the memory layout supported by the neural network processor later.

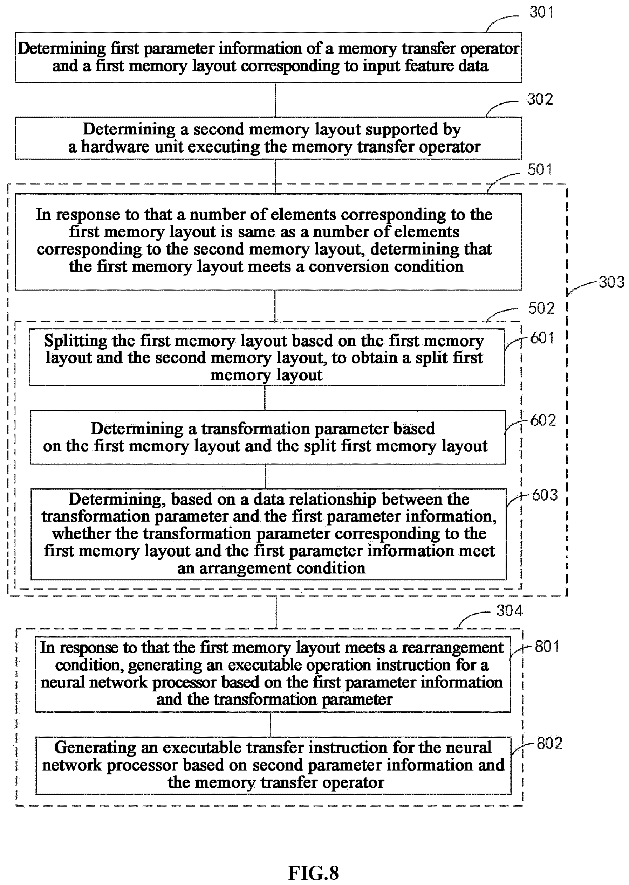

In some embodiments, as shown in FIG. 8, step 304 may include steps 801 and 802.

Step 801. Generating an executable operation instruction for the neural network processor based on the first parameter information and the transformation parameter.

The operation instruction is used for generating the second parameter information.

When it is determined that the first memory layout meets the rearrangement condition, the executable operation instruction may be generated for the neural network processor based on the first parameter information and the transformation parameter. The operation instruction can be used to generate the second parameter information. Subsequently, the second parameter information may be used to enable the memory transfer operator to access the input feature data according to the second memory layout supported by the hardware unit.

Step 802. Generating an executable transfer instruction for the neural network processor based on the second parameter information and the memory transfer operator.

After the second parameter information is generated based on the operation instruction, the memory transfer operator is executed based on the second parameter information, so that the input feature data may be accessed according to the second memory layout supported by the hardware unit, without introducing the memory layout conversion instruction.

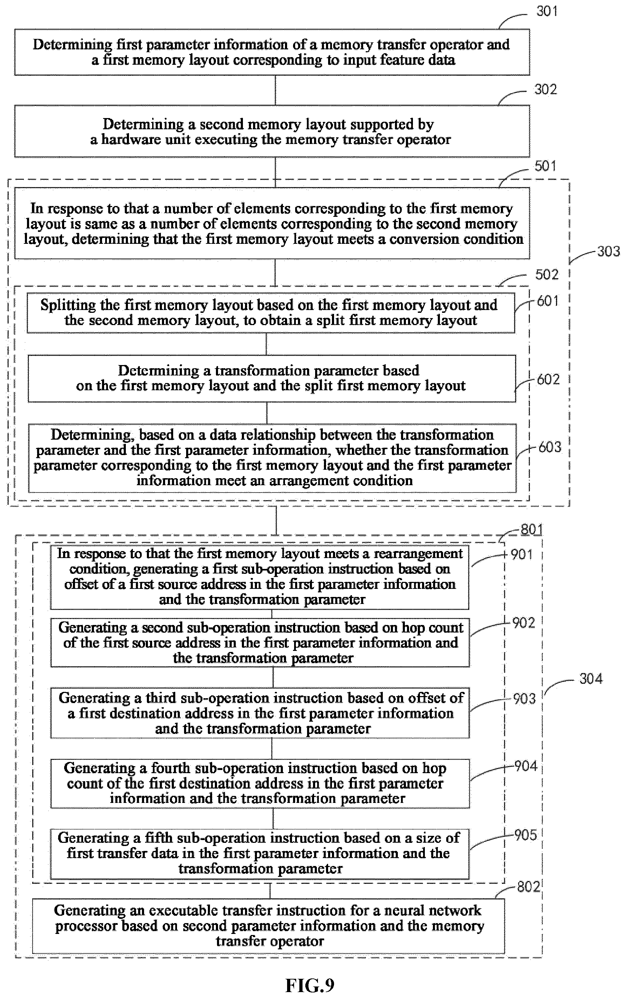

In some embodiments, as shown in FIG. 9, step 801 may include steps 901 to 905.

Step 901. Generating a first sub-operation instruction based on the offset of the first source address in the first parameter information and the transformation parameter.

The operation instruction includes the first sub-operation instruction, a second sub-operation instruction, a third sub-operation instruction, a fourth sub-operation instruction, and a fifth sub-operation instruction. The first sub-operation instruction is used for determining offset of a second source address in the second parameter information.

When it is determined that the first memory layout meets the rearrangement condition, the second parameter information may be generated by using the operation instruction. The second parameter information includes the offset (src_offset') of the second source address, a hop count (src_step') of the second source address, offset (dst offset') of the second destination address, a hop count (dst step') of the second destination address, and a size of second transfer data (transfer_size').

The offset of the second source address may be determined based on the offset of the first source address and the transformation parameter. The offset of the second source address satisfies the following expression:

$$src\_offset' = src\_offset/f$$

In combination with the foregoing expression, the first sub-operation instruction corresponding to the offset src_offset' of the second source address may be generated based on the offset of the first source address and the transformation parameter.

Step 902. Generating a second sub-operation instruction based on the hop count of the first source address in the first parameter information and the transformation parameter.

The second sub-operation instruction is used for determining the hop count of the second source address in the second parameter information.

The hop count of the second source address may be determined based on the hop count of the first source address and the transformation parameter. The hop count of the second source address satisfies the following expression:

$$src\_step' = src\_step/f$$

In combination with the foregoing expression, the second sub-operation instruction corresponding to the hop count src_step' of the second source address may be generated based on the hop count of the first source address and the transformation parameter.

Step 903. Generating a third sub-operation instruction based on the offset of the first destination address in the first parameter information and the transformation parameter.

The third sub-operation instruction is used for determining the offset of the second destination address in the second parameter information.

The offset of the second destination address may be determined based on the offset of the first destination address and the transformation parameter. The offset of the second destination address satisfies the following expression:

$$dst\_offset' = dst\_offset/f$$

In combination with the foregoing expression, the third sub-operation instruction corresponding to the offset dst_offset' of the second destination address may be generated based on the offset of the first destination address and the transformation parameter.

Step 904. Generating a fourth sub-operation instruction based on the hop count of the first destination address in the first parameter information and the transformation parameter.

The fourth sub-operation instruction is used for determining the hop count of the second destination address in the second parameter information.

The hop count of the second destination address may be determined based on the hop count of the first destination address and the transformation parameter. The hop count of the second destination address satisfies the following expression:

$$dst\_step' = dst\_step/f$$

In combination with the foregoing expression, the fourth sub-operation instruction corresponding to the hop count dst step' of the second destination address may be generated based on the hop count of the first destination address and the transformation parameter.

Step 905. Generating a fifth sub-operation instruction based on a size of first transfer data in the first parameter information and the transformation parameter, where the fifth sub-operation instruction is used for determining a size of second transfer data in the second parameter information.

The size of the second transfer data may be determined based on the size of the first transfer data and the transformation parameter. The size of the second transfer data satisfies the following expression:

$$transfer\_size' = transfer\_size/f$$

In combination with the foregoing expression, the fifth sub-operation instruction corresponding to the size transfer_size' of the second transfer data may be generated based on the size of the first transfer data and the transformation parameter.

The compilation-side device in the embodiments of this disclosure can generate a first operation instruction, a second operation instruction, a third operation instruction, a fourth operation instruction, and the fifth sub-operation instruction based on the first parameter information and the transformation parameter when generating an executable instruction for the neural network processor. Since the first operation instruction, the second operation instruction, the third operation instruction, the fourth operation instruction, and the fifth sub-operation instruction all correspond to a smallest hardware unit of the neural network processor, when receiving the foregoing instructions, the neural network processor does not need to convert the instructions but directly performs operations on the input feature data. In this way, convenience of data processing is improved, thereby avoiding further conversion of the instruction, and improving computational efficiency.

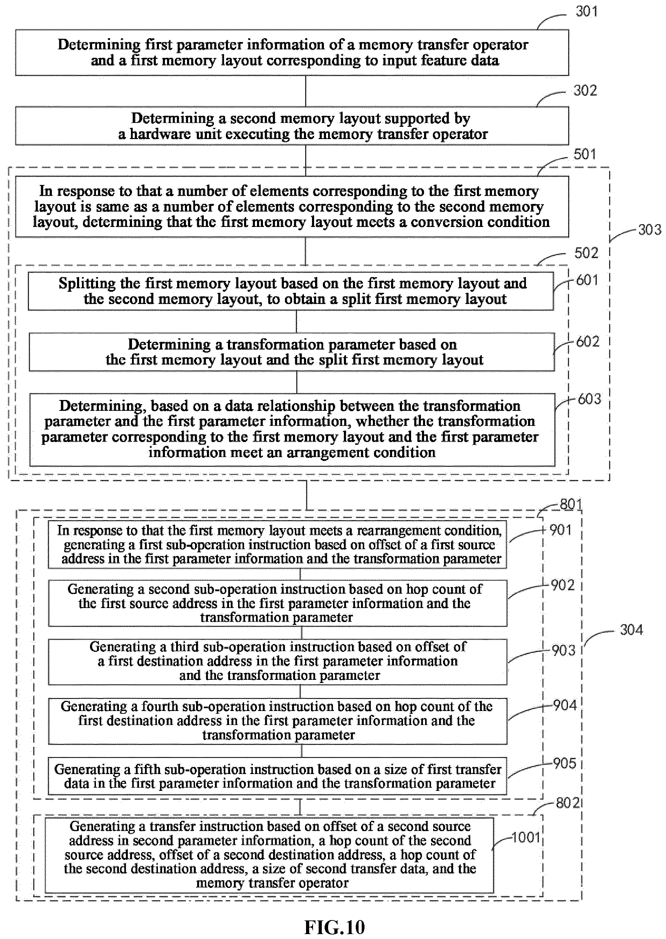

In some embodiments, as shown in FIG. 10, step 802 may include step 1001.

Step 1001. Generating the transfer instruction based on the offset of the second source address in the second parameter information, the hop count of the second source address, the offset of the second destination address, the hop count of the second destination address, the size of the second transfer data, and the memory transfer operator.

After the offset of the second source address in the second parameter information, the hop count of the second source address, the offset of the second destination address, the hop count of the second destination address, and the size of the second transfer data are obtained, the transfer instruction may be generated based on the offset of the second source address, the hop count of the second source address, the offset of the second destination address, the hop count of the second destination address, the size of the second transfer data, and the memory transfer operator to transfer the input feature data according to the second memory layout, so as to obtain transferred data.

For example, the input feature data is a multidimensional array [8, 5], and the first memory layout corresponding to [8, 5] is 4W2C. The second memory layout supported by the hardware unit executing the memory transfer operator is 2W4C. Reference may be made to the introduction of the memory layout in step 301. For example, a result of arranging [8, 5] according to 2W4C is shown in Table 2.

Table 2

| block 1 | W0C0 | W0C1 | W0C2 | W0C3 | W1C0 | W1C1 | W1C2 | W1C3 |
|---|---|---|---|---|---|---|---|---|
| block 2 | W0C4 | | | | W1C4 | | | |
| block 3 | W2C0 | W2C1 | W2C2 | W2C3 | W3C0 | W3C1 | W3C2 | W3C3 |
| block 4 | W2C4 | | | | W3C4 | | | |
| block 5 | W4C0 | W4C1 | W4C2 | W4C3 | W5C0 | W5C1 | W5C2 | W5C3 |
| block 6 | W4C4 | | | | W5C4 | | | |
| block 7 | W6C0 | W6C1 | W6C2 | W6C3 | W7C0 | W7C1 | W7C2 | W7C3 |
| block 8 | W6C4 | | | | W7C4 | | | |

A result of arranging [8, 5] according to 4W2C is shown in Table 3.

Table 3

| block 1 | W0C0 | W0C1 | W1C0 | W1C1 | W2C0 | W2C1 | W3C0 | W3C1 |
|---|---|---|---|---|---|---|---|---|
| block 2 | W0C2 | W0C3 | W1C2 | W1C3 | W2C2 | W2C3 | W3C2 | W3C3 |
| block 3 | W0C4 | | W1C4 | | W2C4 | | W3C4 | |
| block 4 | W4C0 | W4C1 | W5C0 | W5C1 | W6C0 | W6C1 | W7C0 | W7C1 |
| block 5 | W4C2 | W4C3 | W5C2 | W5C3 | W6C2 | W6C3 | W7C2 | W7C3 |

(continued)

| block 6 | W4C4 | | W5C4 | | W6C4 | | W7C4 | |
|---------|------|---|------|---|------|---|------|---|

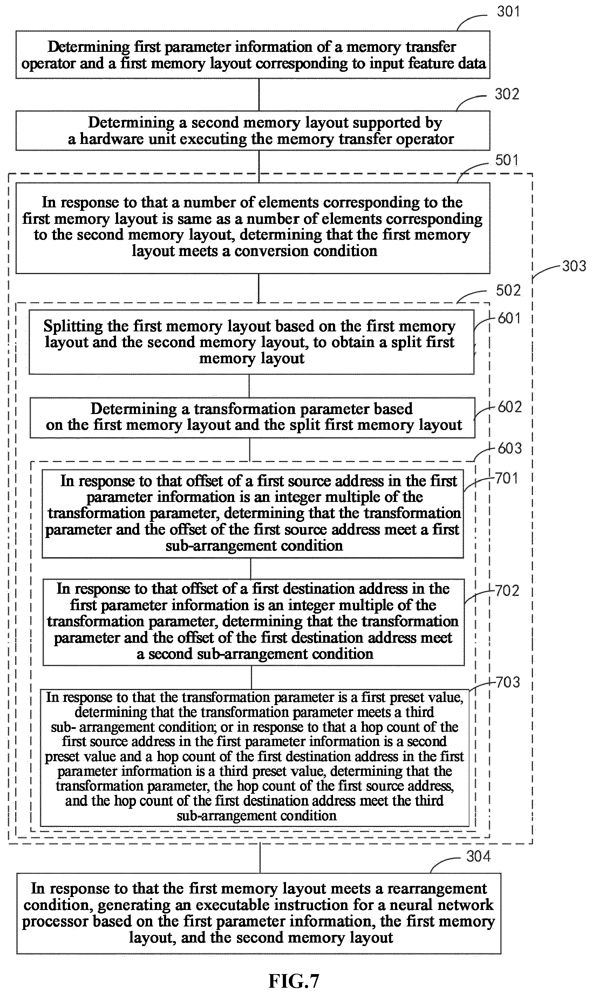

It may be learned from Table 2 and Table 3 that different memory layouts correspond to different arrangement results. Therefore, referring to the contents of FIG. 3 to FIG. 10, the first memory layout may be further processed to be converted into the second memory layout, so as to access [8, 5] according to the second memory layout.

The process of further processing the first memory layout to convert the same into the second memory layout, so as to access [8, 5] according to the second memory layout is described in detail below.

First, whether the first memory layout meets the conversion condition is determined with reference to step 501. Since the number of elements corresponding to the first memory layout is 4 * 2=8 and the number of elements corresponding to the second memory layout is 2 * 4=8, the first memory layout meets the conversion condition.

Subsequently, whether the first memory layout meets the arrangement condition is determined. In the process of determining whether the first memory layout meets the arrangement condition, the first memory layout 4W2C corresponding to [8, 5] may be split with reference to step 601, and the split first memory layout is 2W02W12C. The transformation parameter f may be obtained based on the first memory layout and the split first memory layout. It is satisfied that f=4/2=2.

In addition, the first parameter information of the memory transfer operator includes the src_offset, the src_step, the dst_offset, the dst step, and the transfer_size. If it is satisfied that src_offset=2, src_step=1, dst_offset=2, dst_step=1, and transfer_size=10, whether the data relationship between the transformation parameter and the first parameter information meets a condition is further determined. Referring to steps 701 to 703, it may be learned that mod=(src_offset, f)=0, mod=(dst_offset, f)=0, src_step=1, and dst_step=1. It may be learned that the first memory layout meets the arrangement condition.

When the first memory layout meets the conversion condition and the arrangement condition, it indicates that the first memory layout meets the rearrangement condition. Subsequently, the second parameter information is generated based on the first parameter information and the transformation parameter. Referring to steps 901 to 905, the offset of the second source address in the second parameter information, the hop count of the second source address, the offset of the second destination address, the hop count of the second destination address, and the size of the second transfer data may be obtained. The offset src_offset' of the second source address is 1, the hop count src_step' of the second source address is 1, the offset dst_offset' of the second destination address is 1, the hop count dst_step' of the second destination address is 1, and the size transfer_size' of the second transfer data is 5.

Finally, transferring the input feature data based on the second parameter information by using the transfer instruction may achieve access to the input feature data according to the second memory layout.

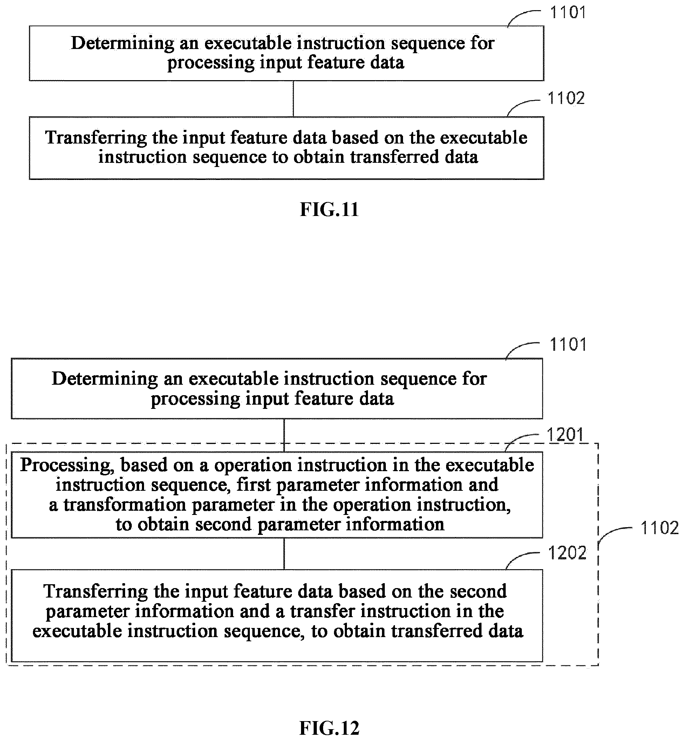

FIG. 11 shows a method for processing input feature data through a neural network processor according to an embodiment of this disclosure. The method may be applied to a running-side device. As shown in FIG. 11, the method includes the following steps 1101 and 1102.

Step 1101. Determining an executable instruction sequence for processing the input feature data.

In some embodiments, the executable instruction sequence includes at least a transfer instruction, which is used for transferring the input feature data. Transferring the input feature data by using the transfer instruction may enable the neural network processor to access the input feature data according to a memory layout supported by the neural network processor, thereby avoiding introduction of a memory layout conversion instruction and thus saving instruction overhead.

After generating the executable instruction sequence, a compilation-side device may send the executable instruction sequence to the neural network processor directly or through a portable hard drive.

It should be noted that the executable instruction sequence includes a plurality of instructions, which may be the instructions executable by the neural network processor in any one of the embodiments shown in FIG. 3 to FIG. 10.

Step 1102. Transferring the input feature data based on the executable instruction sequence to obtain transferred data.

After receiving the executable instruction sequence, the neural network processor executes the executable instruction sequence to transfer the input feature data, so as to obtain the transferred data.

According to the method for processing input feature data through a neural network processor provided in the embodiments of this disclosure, the executable instruction sequence for processing the input feature data is determined, so that the input feature data is transferred by using the executable instruction sequence, so as to obtain the transferred data.

In some embodiments, as shown in FIG. 12, step 1102 may include steps 1201 and 1202.

Step 1201. Processing, based on a operation instruction in the executable instruction sequence, first parameter information and a transformation parameter in the operation instruction, to obtain second parameter information.

According to the solutions shown in FIG. 3 to FIG. 10, when the first memory layout corresponding to the input feature data is different from the second memory layout supported by a hardware unit executing the memory transfer instruction, the first parameter information and the transformation parameter are processed by executing the operation instruction in the executable instruction sequence, so as to obtain the second parameter information. Subsequently, the second parameter information is used to transfer the input feature data according to the second memory layout supported by the hardware unit.

Step 1202. Transferring the input feature data based on the second parameter information and a transfer instruction in the executable instruction sequence, to obtain the transferred data.

After the second parameter information is obtained, the transfer instruction in the executable instruction sequence may be further executed to transfer the input feature data, so as to obtain the transferred data.

According to the method for processing input feature data through a neural network processor that is provided in the embodiments of this disclosure, the second parameter information is obtained by using the operation instruction in the executable instruction sequence. Subsequently, the transferred data may be quickly obtained by transferring the input feature data through the transfer instruction in the executable instruction sequence and the second parameter information, thereby avoiding introduction of a memory layout conversion instruction and improving data processing efficiency.

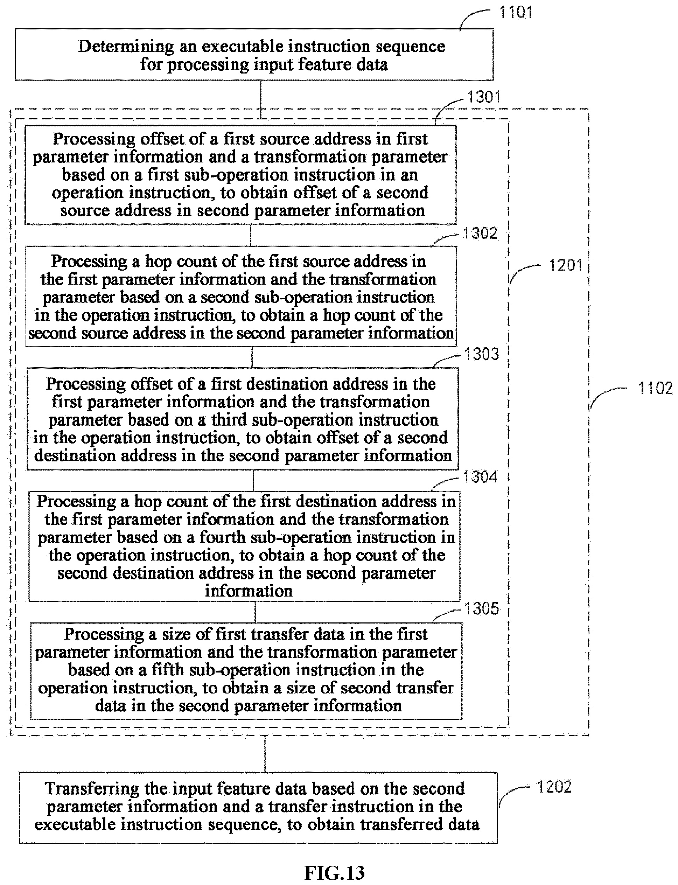

In some embodiments, as shown in FIG. 13, step 1201 may include steps 1301 to 1305.

Step 1301. Processing offset of a first source address in the first parameter information and the transformation parameter based on a first sub-operation instruction in the operation instruction, to obtain offset of a second source address in the second parameter information.

According to the solutions shown in FIG. 3 to FIG. 10, when the first memory layout corresponding to the input feature data is different from the second memory layout supported by the hardware unit executing the memory transfer instruction, the offset of the first source address in the first parameter information and the transformation parameter are processed based on the first sub-operation instruction in the executable operation instruction, to obtain the offset of the second source address in the second parameter information.

Step 1302. Processing a hop count of the first source address in the first parameter information and the transformation parameter based on a second sub-operation instruction in the operation instruction, to obtain a hop count of the second source address in the second parameter information.

After the offset of the second source address is obtained, the second sub-operation instruction in the operation instruction may be further executed to process the hop count of the first source address in the first parameter information and the transformation parameter, to obtain the hop count of the second source address in the second parameter information.

Step 1303. Processing offset of a first destination address in the first parameter information and the transformation parameter based on a third sub-operation instruction in the operation instruction, to obtain offset of a second destination address in the second parameter information.

After the hop count of the second source address is obtained, the third sub-operation instruction in the operation instruction may be further executed to process the offset of the first destination address and the transformation parameter, to obtain the offset of the second destination address in the second parameter information.

Step 1304. Processing a hop count of the first destination address in the first parameter information and the transformation parameter based on a fourth sub-operation instruction in the operation instruction, to obtain a hop count of the second destination address in the second parameter information.

After the offset of the second destination address is obtained, the fourth sub-operation instruction in the operation instruction may be further executed to process the hop count of the first destination address and the transformation parameter, to obtain the hop count of the second destination address in the second parameter information.

Step 1305. Processing a size of first transfer data in the first parameter information and the transformation parameter based on a fifth sub-operation instruction in the operation instruction, to obtain a size of second transfer data in the second parameter information.

After the hop count of the second destination address is obtained, the fifth sub-operation instruction in the operation instruction may be further executed to process the size of the first transfer data and the transformation parameter, to obtain the size of the second transfer data in the second parameter information.

After the first sub-operation instruction, the second sub-operation instruction, the third sub-operation instruction, the fourth sub-operation instruction, and the fifth sub-operation instruction in the operation instruction are executed, the offset of the second source address in the second parameter information, the hop count of the second source address, the offset of the second destination address, the hop count of the second destination address, and the size of the second transfer data may be obtained. Subsequently, the second parameter information may be used to transfer the input feature data according to the second memory layout.

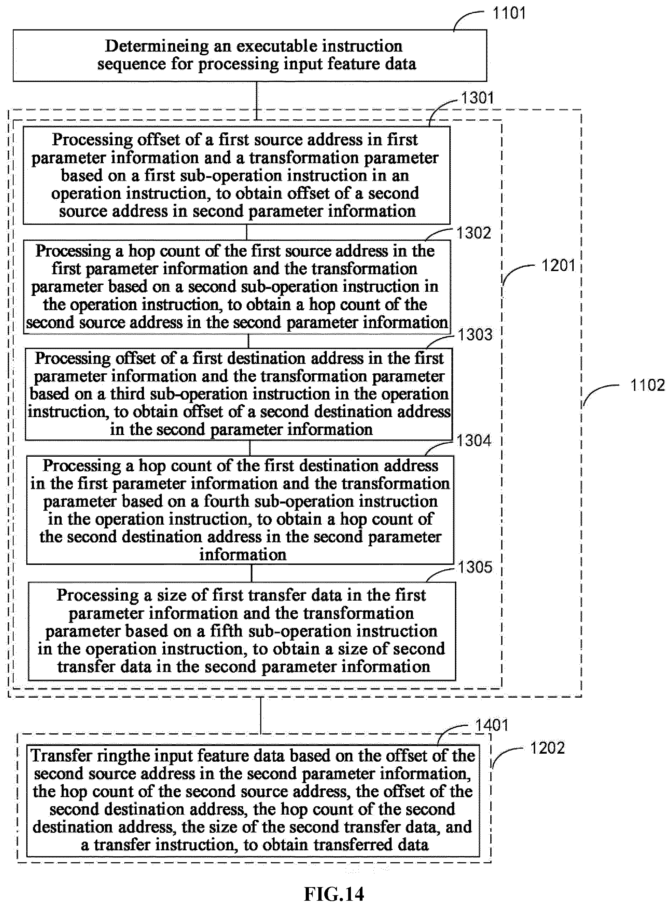

In some embodiments, as shown in FIG. 14, step 1202 may include step 1401.

Step 1401. Transferring the input feature data based on the offset of the second source address in the second parameter information, the hop count of the second source address, the offset of the second destination address, the hop count of the second destination address, the size of the second transfer data, and the transfer instruction, to obtain the transferred data.

After the second parameter information is obtained, the transfer instruction may be further executed based on the offset of the second source address in the second parameter information, the hop count of the second source address, the offset of the second destination address, the hop count of the second destination address, and the size of the second transfer data to transfer the input feature data, so as to obtain the transferred data.

According to the method for processing input feature data through a neural network processor that is provided in the embodiments of this disclosure, if the first memory layout corresponding to the input feature data is different from the second memory layout supported by the hardware unit executing the memory transfer instruction, the offset of the second source address in the second parameter information, the hop count of the second source address, the offset of the second destination address, the hop count of the second destination address, and the size of the second transfer data may be obtained by executing the first sub-operation instruction, the second sub-operation instruction, the third sub-operation instruction, the fourth sub-operation instruction, and the fifth sub-operation instruction in the operation instruction. Finally, transferring the input feature data based on the second parameter information by using the transfer instruction may achieve access to the input feature data according to the memory layout supported by the neural network processor, which avoids the introduction of the memory layout conversion instruction, thereby improving the data processing efficiency of the neural network processor.

Exemplary apparatus

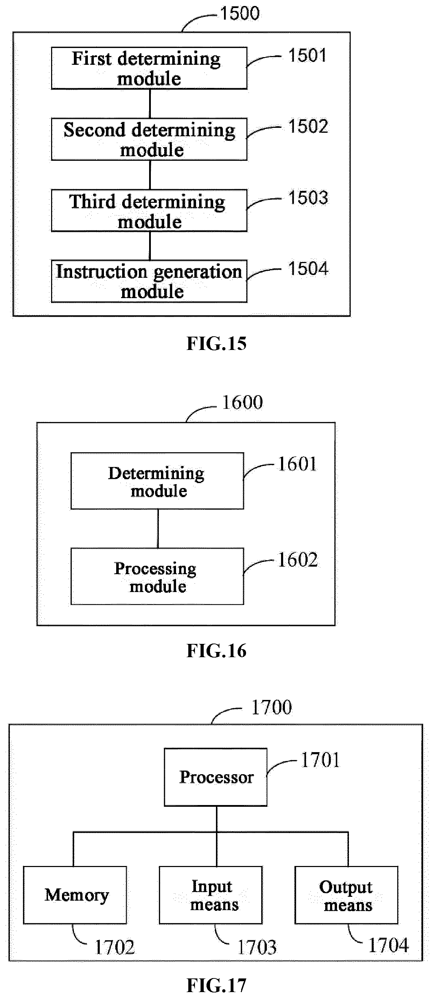

FIG. 15 shows an instruction generation apparatus for a neural network processor according to an embodiment of this disclosure. As shown in FIG. 15, an instruction generation apparatus 1500 for a neural network processor includes a first determining module 1501, a second determining module 1502, a third determining module 1503, and an instruction generation module 1504.

The first determining module 1501 is configured to determine first parameter information of a memory transfer operator and a first memory layout corresponding to input feature data.

The second determining module 1502 is configured to determine a second memory layout supported by a hardware unit executing the memory transfer operator.

The third determining module 1503 is configured to determine whether the first memory layout meets a rearrangement condition in response to that the first memory layout is different from the second memory layout.

The instruction generation module 1504 is configured to generate an executable instruction for the neural network processor based on the first parameter information, the first memory layout, and the second memory layout in response to that the first memory layout meets the rearrangement condition.

In some embodiments, the third determining module 1503 is further configured to determine that the first memory layout meets a conversion condition in response to that a number of elements corresponding to the first memory layout is same as a number of elements corresponding to the second memory layout; and determine whether the first memory layout meets an arrangement condition based on the first parameter information, the first memory layout, and the second memory layout, where the rearrangement condition includes the conversion condition and the arrangement condition.

In some embodiments, the third determining module 1503 is further configured to split the first memory layout based on the first memory layout and the second memory layout, to obtain a split first memory layout; determine a transformation parameter based on the first memory layout and the split first memory layout; and determine, based on a data relationship between the transformation parameter and the first parameter information, whether the transformation parameter corresponding to the first memory layout and the first parameter information meet the arrangement condition.

In some embodiments, the third determining module 1503 is further configured to: in response to that offset of a first source address in the first parameter information is an integer multiple of the transformation parameter, determine that the transformation parameter and the offset of the first source address meet a first sub-arrangement condition; in response to that offset of a first destination address in the first parameter information is an integer multiple of the transformation parameter, determine that the transformation parameter and the offset of the first destination address meet a second sub-arrangement condition; and in response to that the transformation parameter is a first preset value, determine that the transformation parameter meets a third sub-arrangement condition; or in response to that a hop count of the first source address in the first parameter information is a second preset value and a hop count of the first destination address in the first parameter information is a third preset value, determine that the transformation parameter, the hop count of the first source address, and the hop count of the first destination address meet the third sub-arrangement condition, where the arrangement condition includes the first sub-arrangement condition, the second sub-arrangement condition, and the third sub-arrangement condition.

In some embodiments, the instruction generation module 1504 is further configured to: generate an executable operation instruction for the neural network processor based on the first parameter information and the transformation parameter, where the operation instruction is used for generating second parameter information; and generate an executable transfer instruction for the neural network processor based on the second parameter information and the memory transfer operator.

In some embodiments, the instruction generation module 1504 is further configured to: generate a first sub-operation instruction based on the offset of the first source address in the first parameter information and the transformation parameter, where the first sub-operation instruction is used for determining offset of a second source address in the second parameter information; generate a second sub-operation instruction based on the hop count of the first source address in the first parameter information and the transformation parameter, where the second sub-operation instruction is used for determining a hop count of the second source address in the second parameter information; generate a third sub-operation instruction based on the offset of the first destination address in the first parameter information and the transformation parameter, where the third sub-operation instruction is used for determining offset of a second destination address in the second parameter information; generate a fourth sub-operation instruction based on the hop count of the first destination address in the first parameter information and the transformation parameter, where the fourth sub-operation instruction is used for determining a hop count of the second destination address in the second parameter information; and generate a fifth sub-operation instruction based on a size of first transfer data in the first parameter information and the transformation parameter, where the fifth sub-operation instruction is used for determining a size of second transfer data in the second parameter information, and the operation instruction includes the first sub-operation instruction, the second sub-operation instruction, the third sub-operation instruction, the fourth sub-operation instruction, and the fifth sub-operation instruction.

In some embodiments, the instruction generation module 1504 is further configured to generate the transfer instruction based on the offset of the second source address in the second parameter information, the hop count of the second source address, the offset of the second destination address, the hop count of the second destination address, the size of the second transfer data, and the memory transfer operator.

FIG. 16 shows an apparatus for processing input feature data through a neural network processor according to an embodiment of this disclosure. As shown in FIG. 16, an apparatus 1600 for processing input feature data through a neural network processor includes a determining module 1601 and a processing module 1602.

The determining module 1601 is configured to determine an executable instruction sequence for processing the input feature data.

The processing module 1602 is configured to transfer the input feature data based on the executable instruction sequence to obtain transferred data.

In some embodiments, the processing module 1602 is further configured to: process first parameter information in the operation instruction and a transformation parameter based on an operation instruction in the executable instruction sequence, to obtain second parameter information; and transfer the input feature data based on the second parameter information and a transfer instruction in the executable instruction sequence, to obtain the transferred data.

In some embodiments, the processing module 1602 is further configured to: process offset of a first source address in the first parameter information and the transformation parameter based on a first sub-operation instruction in the operation instruction, to obtain offset of a second source address in the second parameter information; process a hop count of the first source address in the first parameter information and the transformation parameter based on a second sub-operation instruction in the operation instruction, to obtain a hop count of the second source address in the second parameter information; process offset of a first destination address in the first parameter information and the transformation parameter based on a third sub-operation instruction in the operation instruction, to obtain offset of a second destination address in the second parameter information; process a hop count of the first destination address in the first parameter information and the transformation parameter based on a fourth sub-operation instruction in the operation instruction, to obtain a hop count of the second destination address in the second parameter information; and process a size of first transfer data in the first parameter information and the transformation parameter based on a fifth sub-operation instruction in the operation instruction, to obtain a size of second transfer data in the second parameter information.

In some embodiments, the processing module 1602 is further configured to transfer the input feature data based on the offset of the second source address in the second parameter information, the hop count of the second source address, the offset of the second destination address, the hop count of the second destination address, the size of the second transfer data, and the transfer instruction, to obtain the transferred data.

Exemplary electronic device

FIG. 17 is a diagram of a structure of an electronic device according to an embodiment of this disclosure. As shown in FIG. 17, an electronic device 1700 includes one or more processors 1701 and a memory 1702.

The processor 1701 may be a central processing unit (CPU) or another form of processing unit having a data processing capability and/or an instruction execution capability, and can control another component in the electronic device 1700 to perform a desired function.

The memory 1702 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1701 may execute the program instruction to implement the instruction generation method according to various embodiments of this disclosure that are described above or other desired functions.

In an example, the electronic device 1700 may further include an input means 1703 and an output means 1704. These components are connected to each other through a bus system and/or another form of connection mechanism (not shown).

Certainly, for simplicity, FIG. 17 shows only some of components in the electronic device 1700 that are related to this disclosure, and components such as a bus and an input/output interface are omitted. In addition, according to specific application situations, the electronic device 1700 may further include any other appropriate components.

Exemplary computer program product and computer readable storage medium

In addition to the foregoing methods and devices, embodiments of this disclosure may also relate to a computer program product, which includes computer program instructions. When the computer program instructions are run by a processor, the processor is enabled to perform the steps, of the instruction generation method or other methods according to the embodiments of this disclosure, that are described in the foregoing "Exemplary methods" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the instruction generation method or other methods according to the embodiments of this disclosure, that are described in the foregoing "Exemplary methods" section of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

It should be further pointed out that, various components or various steps in the apparatus, the device, and the methods of this disclosure may be disassembled and/or recombined. These disassembling and/or recombinations shall be regarded as equivalent solutions of this disclosure.

In addition, the description is not intended to limit the embodiments of this disclosure to forms disclosed herein. Although a plurality of exemplary aspects and embodiments have been discussed above, a person skilled in the art may recognize certain variations, modifications, changes, additions, and sub-combinations thereof.

**Claims**

1. An instruction generation method for a neural network processor, comprising:

   determining (301) first parameter information of a memory transfer operator and a first memory layout corresponding to input feature data;
   determining (302) a second memory layout supported by a hardware unit executing the memory transfer operator;

in response to that the first memory layout is different from the second memory layout, determining (303) whether the first memory layout meets a rearrangement condition; and

in response to that the first memory layout meets the rearrangement condition, generating (304) an executable instruction for the neural network processor based on the first parameter information, the first memory layout, and the second memory layout.

2. The method according to claim 1, wherein the determining (303) whether the first memory layout meets a rearrangement condition comprises:

in response to that a number of elements corresponding to the first memory layout is same as a number of elements corresponding to the second memory layout, determining (501) that the first memory layout meets a conversion condition; and

determining (502) whether the first memory layout meets an arrangement condition based on the first parameter information, the first memory layout, and the second memory layout,

wherein the rearrangement condition comprises the conversion condition and the arrangement condition.

3. The method according to claim 2, wherein the determining whether the first memory layout meets an arrangement condition based on the first parameter information, the first memory layout, and the second memory layout comprises:

splitting (601) the first memory layout based on the first memory layout and the second memory layout, to obtain a split first memory layout;

determining (602) a transformation parameter based on the first memory layout and the split first memory layout; and

determining (603), based on a data relationship between the transformation parameter and the first parameter information, whether the transformation parameter corresponding to the first memory layout and the first parameter information meet the arrangement condition.

4. The method according to any one of claims 1 to 3, wherein the determining (603), based on a data relationship between the transformation parameter and the first parameter information, whether the transformation parameter corresponding to the first memory layout and the first parameter information meet the arrangement condition comprises:

in response to that offset of a first source address in the first parameter information is an integer multiple of the transformation parameter, determining (701) that the transformation parameter and the offset of the first source address meet a first sub-arrangement condition;

in response to that offset of a first destination address in the first parameter information is an integer multiple of the transformation parameter, determining (702) that the transformation parameter and the offset of the first destination address meet a second sub-arrangement condition; and

in response to that the transformation parameter is a first preset value, determining (703) that the transformation parameter meets a third sub-arrangement condition; or

in response to that a hop count of the first source address in the first parameter information is a second preset value and a hop count of the first destination address in the first parameter information is a third preset value, determining (703) that the transformation parameter, the hop count of the first source address, and the hop count of the first destination address meet the third sub-arrangement condition,

wherein the arrangement condition comprises the first sub-arrangement condition, the second sub-arrangement condition, and the third sub-arrangement condition.

5. The method according to claim 3 or 4, wherein the generating (304) an executable instruction for the neural network processor based on the first parameter information, the first memory layout, and the second memory layout comprises:

generating (801) an executable operation instruction for the neural network processor based on the first parameter information and the transformation parameter, wherein the operation instruction is used for generating second parameter information; and

generating (802) an executable transfer instruction for the neural network processor based on the second parameter information and the memory transfer operator.

6. The method according to any one of claims 1 to 5, wherein the generating (801) an executable operation instruction for the neural network processor based on the first parameter information and the transformation parameter comprises:

generating (901) a first sub-operation instruction based on the offset of the first source address in the first parameter information and the transformation parameter, wherein the first sub-operation instruction is used for determining offset of a second source address in the second parameter information;
generating (902) a second sub-operation instruction based on the hop count of the first source address in the first parameter information and the transformation parameter, wherein the second sub-operation instruction is used for determining a hop count of the second source address in the second parameter information;
generating (903) a third sub-operation instruction based on the offset of the first destination address in the first parameter information and the transformation parameter, wherein the third sub-operation instruction is used for determining offset of a second destination address in the second parameter information;
generating (904) a fourth sub-operation instruction based on the hop count of the first destination address in the first parameter information and the transformation parameter, wherein the fourth sub-operation instruction is used for determining a hop count of the second destination address in the second parameter information; and
generating (905) a fifth sub-operation instruction based on a size of first transfer data in the first parameter information and the transformation parameter, wherein the fifth sub-operation instruction is used for determining a size of second transfer data in the second parameter information,
wherein the operation instruction comprises the first sub-operation instruction, the second sub-operation instruction, the third sub-operation instruction, the fourth sub-operation instruction, and the fifth sub-operation instruction.

7. The method according to any one of claims 1 to 6, wherein the generating (802) an executable transfer instruction for the neural network processor based on the second parameter information and the memory transfer operator comprises:
generating (1001) the executable transfer instruction based on the offset of the second source address in the second parameter information, the hop count of the second source address, the offset of the second destination address, the hop count of the second destination address, the size of the second transfer data, and the memory transfer operator.

8. A method for processing input feature data through a neural network processor, comprising:

determining (1101) an executable instruction sequence for processing input feature data; and
transferring (1102) the input feature data based on the executable instruction sequence to obtain transferred data.

9. The method according to claim 8, wherein the transferring (1102) the input feature data based on the executable instruction sequence to obtain transferred data comprises:

processing (1201), based on a operation instruction in the executable instruction sequence, first parameter information and a transformation parameter in the operation instruction, to obtain second parameter information; and
transferring (1202) the input feature data based on the second parameter information and a transfer instruction in the executable instruction sequence, to obtain the transferred data.

10. The method according to claim 9, wherein the processing (1201), based on a operation instruction in the executable instruction sequence, first parameter information and a transformation parameter in the operation instruction, to obtain second parameter information comprises:

processing (1301) offset of a first source address in the first parameter information and the transformation parameter based on a first sub-operation instruction in the operation instruction, to obtain offset of a second source address in the second parameter information;
processing (1302) a hop count of the first source address in the first parameter information and the transformation parameter based on a second sub-operation instruction in the operation instruction, to obtain a hop count of the second source address in the second parameter information;
processing (1303) offset of a first destination address in the first parameter information and the transformation parameter based on a third sub-operation instruction in the operation instruction, to obtain offset of a second destination address in the second parameter information;
processing (1304) a hop count of the first destination address in the first parameter information and the transformation parameter based on a fourth sub-operation instruction in the operation instruction, to obtain a hop count of the second destination address in the second parameter information; and

processing (1305) a size of first transfer data in the first parameter information and the transformation parameter based on a fifth sub-operation instruction in the operation instruction, to obtain a size of second transfer data in the second parameter information.

11. The method according to any one of claims 8 to 10, wherein the transferring (1202) the input feature data based on the second parameter information and a transfer instruction in the executable instruction sequence, to obtain the transferred data comprises:

transferring (1401) the input feature data based on the offset of the second source address in the second parameter information, the hop count of the second source address, the offset of the second destination address, the hop count of the second destination address, the size of the second transfer data, and the transfer instruction, to obtain the transferred data.

12. An instruction generation apparatus for a neural network processor, comprising:

a first determining module (1501), configured to determine first parameter information of a memory transfer operator and a first memory layout corresponding to input feature data;

a second determining module (1502), configured to determine a second memory layout supported by a hardware unit executing the memory transfer operator;

a third determining module (1503), configured to determine whether the first memory layout meets a rearrangement condition in response to that the first memory layout is different from the second memory layout; and

an instruction generation module (1504), configured to generate an executable instruction for the neural network processor based on the first parameter information, the first memory layout, and the second memory layout, in response to that the first memory layout meets the rearrangement condition.

13. The instruction generation apparatus according to claim 12, wherein the third determining module (1503) is further configured to:

in response to that a number of elements corresponding to the first memory layout is same as a number of elements corresponding to the second memory layout, determining that the first memory layout meets a conversion condition; and

determining whether the first memory layout meets an arrangement condition based on the first parameter information, the first memory layout, and the second memory layout,

wherein the rearrangement condition comprises the conversion condition and the arrangement condition.

14. A computer readable non-transitory storage medium storing thereon a computer program for implementing the instruction generation method for a neural network processor according to any one of claims 1 to 7 or the method for processing input feature data through a neural network processor according to any one of claims 8 to 11.

15. An electronic device, wherein the electronic device comprises:

a processor (1701); and

a memory (1702), configured to store processor-executable instructions,

wherein the processor is configured to read the executable instructions from the memory, and execute the instruction to implement the instruction generation method for a neural network processor according to any one of claims 1 to 7 or the method for processing input feature data through a neural network processor according to any one of claims 8 to 11.

**FIG.1**

**FIG.2**

| 301 |
| --- |
| Determining first parameter information of a memory transfer operator and a first memory layout corresponding to input feature data |

| 302 |
| --- |
| Determining a second memory layout supported by a hardware unit executing the memory transfer operator |

| 303 |
| --- |
| In response to that the first memory layout is different from the second memory layout, determining whether the first memory layout meets a rearrangement condition |

| 304 |
| --- |
| In response to that the first memory layout meets the rearrangement condition, generating an executable instruction for a neural network processor based on the first parameter information, the first memory layout, and the second memory layout |

**FIG.3**

**FIG.4**

301

Determining first parameter information of a memory transfer operator
and a first memory layout corresponding to input feature data

302

Determining a second memory layout supported by
a hardware unit executing the memory transfer operator

501

In response to that a number of elements corresponding to the first memory
layout is same as a number of elements corresponding to the second memory
layout, determining that the first memory layout meets a conversion condition

303

502

Determining whether the first memory layout meets an arrangement
condition based on the first parameter information, the first memory layout,
and the second memory layout

304

In response to that the first memory layout meets a rearrangement condition,
generating an executable instruction for a neural network processor based on
the first parameter information, the first memory layout, and the second
memory layout

FIG.5

301

Determining first parameter information of a memory transfer operator and a first memory layout corresponding to input feature data

302

Determining a second memory layout supported by a hardware unit executing the memory transfer operator

501

In response to that a number of elements corresponding to the first memory layout is same as a number of elements corresponding to the second memory layout, determining that the first memory layout meets a conversion condition

303

502

Splitting the first memory layout based on the first memory layout and the second memory layout, to obtain a split first memory layout

601

Determining a transformation parameter based on the first memory layout and the split first memory layout

602

Determining, based on a data relationship between the transformation parameter and the first parameter information, whether the transformation parameter corresponding to the first memory layout and the first parameter information meet an arrangement condition

603

304

In response to that the first memory layout meets a rearrangement condition, generating an executable instruction for a neural network processor based on the first parameter information, the first memory layout, and the second memory layout

**FIG.6**

```
                                                                    ┌─ 301
┌──────────────────────────────────────────────────────────────┐
│   Determining first parameter information of a memory transfer │
│ operator and a first memory layout corresponding to input      │
│ feature data                                                   │
└──────────────────────────────────────────────────────────────┘
                                                                    ┌─ 302
┌──────────────────────────────────────────────────────────────┐
│           Determining a second memory layout supported by      │
│        a hardware unit executing the memory transfer operator  │
└──────────────────────────────────────────────────────────────┘
                                                                    ┌─ 501
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│ ┌──────────────────────────────────────────────────────────┐ │
│ │     In response to that a number of elements corresponding │ │
│ │ to the first memory layout is same as a number of elements │ │
│ │ corresponding to the second memory layout, determining     │ │
│ │ that the first memory layout meets a conversion condition   │ │   ┌─303
│ └──────────────────────────────────────────────────────────┘ │
│                                                         ┌─ 502 │
│ ┌ ─ ─ ─ ─ ─ ─ ─ ─ ─ ─ ─ ─ ─ ─ ─ ─ ─ ─ ─ ─ ─ ─ ─ ─ ─ ┐ │
│ │ ┌──────────────────────────────────────────────┐   ┌601   │
│ │ │ Splitting the first memory layout based on the │   │
│ │ │ first memory layout and the second memory      │   │
│ │ │ layout, to obtain a split first memory layout  │   │
│ │ └──────────────────────────────────────────────┘   │
│ │ ┌──────────────────────────────────────────────┐   ┌602
│ │ │ Determining a transformation parameter based   │   │
│ │ │ on the first memory layout and the split first │   │
│ │ │ memory layout                                  │   │
│ │ └──────────────────────────────────────────────┘   ┌603
│ │ ┌ ─ ─ ─ ─ ─ ─ ─ ─ ─ ─ ─ ─ ─ ─ ─ ─ ─ ─ ─ ─ ┐   ┌701
│ │ │ In response to that offset of a first source  │
│ │ │ address in the first parameter information is  │
│ │ │ an integer multiple of the transformation      │
│ │ │ parameter, determining that the transformation │
│ │ │ parameter and the offset of the first source   │
│ │ │ address meet a first sub-arrangement condition │
│ │ │ ┌──────────────────────────────────────────┐  ┌702
│ │ │ │ In response to that offset of a first      │
│ │ │ │ destination address in the first parameter │
│ │ │ │ information is an integer multiple of the  │
│ │ │ │ transformation parameter, determining that │
│ │ │ │ the transformation parameter and the offset│
│ │ │ │ of the first destination address meet a    │
│ │ │ │ second sub-arrangement condition           │
│ │ │ └──────────────────────────────────────────┘  ┌703
│ │ │ In response to that the transformation         │
│ │ │ parameter is a first preset value, determining │
│ │ │ that the transformation parameter meets a third│
│ │ │ sub- arrangement condition; or in response to  │
│ │ │ that a hop count of the first source address in│
│ │ │ the first parameter information is a second     │
│ │ │ preset value and a hop count of the first      │
│ │ │ destination address in the first parameter     │
│ │ │ information is a third preset value, determining│
│ │ │ that the transformation parameter, the hop     │
│ │ │ count of the first source address, and the hop │
│ │ │ count of the first destination address meet the│
│ │ │ third sub-arrangement condition                │
└ ─ ─ ─ ─ ─ ─ ─ ─ ─ ─ ─ ─ ─ ─ ─ ─ ─ ─ ─ ─ ─ ─ ─ ─ ─ ┘
                                                                    ┌─ 304
┌──────────────────────────────────────────────────────────────┐
│  In response to that the first memory layout meets a           │
│ rearrangement condition, generating an executable instruction  │
│ for a neural network processor based on the first parameter    │
│ information, the first memory layout, and the second memory     │
│ layout                                                         │
└──────────────────────────────────────────────────────────────┘
```

**FIG.7**

```
                                                                            ┌─ 301
┌─────────────────────────────────────────────────────────────────────┐
│ Determining first parameter information of a memory transfer operator │
│     and a first memory layout corresponding to input feature data     │
└─────────────────────────────────────────────────────────────────────┘
                                                                            ┌─ 302
┌─────────────────────────────────────────────────────────────────────┐
│              Determining a second memory layout supported by          │
│           a hardware unit executing the memory transfer operator      │
└─────────────────────────────────────────────────────────────────────┘
                                                                            ┌─ 501
┌─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│  ┌───────────────────────────────────────────────────────────────┐    │
│  │     In response to that a number of elements corresponding to the │
│  │        first memory layout is same as a number of elements        │
│  │   corresponding to the second memory layout, determining that     │
│  │       the first memory layout meets a conversion condition        │    ┌─ 303
│  └───────────────────────────────────────────────────────────────┘    │
│                                                                 ┌─ 502  │
│  ┌─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐    │
│  │  ┌──────────────────────────────────────────────┐  ┌─ 601     │    │
│  │  │ Splitting the first memory layout based on the first memory │    │
│  │  │ layout and the second memory layout, to obtain a split first│    │
│  │  │                    memory layout             │              │    │
│  │  └──────────────────────────────────────────────┘              │    │
│  │                                                     ┌─ 602      │    │
│  │  ┌──────────────────────────────────────────────┐             │    │
│  │  │      Determining a transformation parameter based          │    │
│  │  │ on the first memory layout and the split first memory layout│    │
│  │  └──────────────────────────────────────────────┘             │    │
│  │                                                     ┌─ 603      │    │
│  │  ┌──────────────────────────────────────────────┐             │    │
│  │  │   Determining, based on a data relationship between the     │    │
│  │  │ transformation parameter and the first parameter information,│    │
│  │  │  whether the transformation parameter corresponding to the  │    │
│  │  │ first memory layout and the first parameter information meet │    │
│  │  │               an arrangement condition        │              │    │
│  │  └──────────────────────────────────────────────┘             │    │
│  └─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘    │
└─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                                                                            ┌─ 304
┌─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│  ┌──────────────────────────────────────────────┐  ┌─ 801          │
│  │  In response to that the first memory layout meets a rearrangement│
│  │  condition, generating an executable operation instruction for a  │
│  │ neural network processor based on the first parameter information  │
│  │             and the transformation parameter                      │
│  └──────────────────────────────────────────────┘                  │
│  ┌──────────────────────────────────────────────┐  ┌─ 802          │
│  │  Generating an executable transfer instruction for the neural     │
│  │ network processor based on second parameter information and       │
│  │               the memory transfer operator                        │
│  └──────────────────────────────────────────────┘                  │
└─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

FIG.8

301

Determining first parameter information of a memory transfer operator and a first memory layout corresponding to input feature data

302

Determining a second memory layout supported by a hardware unit executing the memory transfer operator

501

In response to that a number of elements corresponding to the first memory layout is same as a number of elements corresponding to the second memory layout, determining that the first memory layout meets a conversion condition

303

502

Splitting the first memory layout based on the first memory layout and the second memory layout, to obtain a split first memory layout

601

Determining a transformation parameter based on the first memory layout and the split first memory layout

602

Determining, based on a data relationship between the transformation parameter and the first parameter information, whether the transformation parameter corresponding to the first memory layout and the first parameter information meet an arrangement condition

603

801

In response to that the first memory layout meets a rearrangement condition, generating a first sub-operation instruction based on offset of a first source address in the first parameter information and the transformation parameter

901

Generating a second sub-operation instruction based on hop count of the first source address in the first parameter information and the transformation parameter

902

Generating a third sub-operation instruction based on offset of a first destination address in the first parameter information and the transformation parameter

903

304

Generating a fourth sub-operation instruction based on hop count of the first destination address in the first parameter information and the transformation parameter

904

Generating a fifth sub-operation instruction based on a size of first transfer data in the first parameter information and the transformation parameter

905

802

Generating an executable transfer instruction for a neural network processor based on second parameter information and the memory transfer operator

FIG.9

Determining first parameter information of a memory transfer operator
and a first memory layout corresponding to input feature data — 301

Determining a second memory layout supported by
a hardware unit executing the memory transfer operator — 302

— 501

In response to that a number of elements corresponding to the first memory
layout is same as a number of elements corresponding to the second memory
layout, determining that the first memory layout meets a conversion condition — 303

— 502

Splitting the first memory layout based on the first memory layout and
the second memory layout, to obtain a split first memory layout — 601

Determining a transformation parameter based on
the first memory layout and the split first memory layout — 602

Determining, based on a data relationship between the transformation
parameter and the first parameter information, whether the transformation
parameter corresponding to the first memory layout and the first parameter
information meet an arrangement condition — 603

— 801

In response to that the first memory layout meets a rearrangement condition,
generating a first sub-operation instruction based on offset of a first source
address in the first parameter information and the transformation parameter — 901

Generating a second sub-operation instruction based on hop count of
the first source address in the first parameter information and the
transformation parameter — 902

Generating a third sub-operation instruction based on offset of
a first destination address in the first parameter information
and the transformation parameter — 903

— 304

Generating a fourth sub-operation instruction based on hop count of the
first destination address in the first parameter information and the
transformation parameter — 904

Generating a fifth sub-operation instruction based on a size of first transfer
data in the first parameter information and the transformation parameter — 905

— 802

Generating a transfer instruction based on offset of a second source
address in second parameter information, a hop count of the second
source address, offset of a second destination address, a hop count of
the second destination address, a size of second transfer data, and the
memory transfer operator — 1001

**FIG.10**

1101

> Determining an executable instruction sequence for processing input feature data

1102

> Transferring the input feature data based on the executable instruction sequence to obtain transferred data

FIG.11

1101

> Determining an executable instruction sequence for processing input feature data

1201

> Processing, based on a operation instruction in the executable instruction sequence, first parameter information and a transformation parameter in the operation instruction, to obtain second parameter information

1102

1202

> Transferring the input feature data based on the second parameter information and a transfer instruction in the executable instruction sequence, to obtain transferred data

FIG.12

1101

Determining an executable instruction sequence
for processing input feature data

1301

Processing offset of a first source address in first
parameter information and a transformation parameter
based on a first sub-operation instruction in an
operation instruction, to obtain offset of a second
source address in second parameter information

1302

Processing a hop count of the first source address in
the first parameter information and the transformation
parameter based on a second sub-operation instruction
in the operation instruction, to obtain a hop count of the
second source address in the second parameter information

1201

1303

Processing offset of a first destination address in the
first parameter information and the transformation
parameter based on a third sub-operation instruction
in the operation instruction, to obtain offset of a second
destination address in the second parameter information

1102

1304

Processing a hop count of the first destination address in
the first parameter information and the transformation
parameter based on a fourth sub-operation instruction in
the operation instruction, to obtain a hop count of the
second destination address in the second parameter
information

1305

Processing a size of first transfer data in the first
parameter information and the transformation parameter
based on a fifth sub-operation instruction in the
operation instruction, to obtain a size of second transfer
data in the second parameter information

Transferring the input feature data based on the second
parameter information and a transfer instruction in the
executable instruction sequence, to obtain transferred data

1202

FIG.13

Determineing an executable instruction
sequence for processing input feature data ⌐ 1101

┌─ 1301

Processing offset of a first source address in first
parameter information and a transformation parameter
based on a first sub-operation instruction in an
operation instruction, to obtain offset of a second
source address in second parameter information

⌐ 1302

Processing a hop count of the first source address in the
first parameter information and the transformation
parameter based on a second sub-operation instruction in
the operation instruction, to obtain a hop count of the
second source address in the second parameter information

⌐ 1201

⌐ 1303

Processing offset of a first destination address in the first
parameter information and the transformation parameter
based on a third sub-operation instruction in the operation
instruction, to obtain offset of a second destination address
in the second parameter information

⌐ 1304

⌐ 1102

Processing a hop count of the first destination address
in the first parameter information and the transformation
parameter based on a fourth sub-operation instruction
in the operation instruction, to obtain a hop count of
the second destination address in the second parameter
information

⌐ 1305

Processing a size of first transfer data in the first
parameter information and the transformation
parameter based on a fifth sub-operation instruction
in the operation instruction, to obtain a size of second
transfer data in the second parameter information

⌐ 1401

Transfer ringthe input feature data based on the offset of the
second source address in the second parameter information,
the hop count of the second source address, the offset of the
second destination address, the hop count of the second
destination address, the size of the second transfer data, and
a transfer instruction, to obtain transferred data

⌐ 1202

**FIG.14**

1500

First determining module — 1501

Second determining module — 1502

Third determining module — 1503

Instruction generation module — 1504

**FIG.15**

1600

Determining module — 1601

Processing module — 1602

**FIG.16**

1700

Processor — 1701

Memory 1702

Input means 1703

Output means 1704

**FIG.17**

Europäisches
Patentamt

European
Patent Office

Office européen
des brevets

# EUROPEAN SEARCH REPORT

**Application Number**

EP 24 20 9530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIANQI CHEN ET AL: "TVM: An Automated End-to-End Optimizing Compiler for Deep Learning", ARXIV.ORG, CORNELL UNIVERSITY LIBRARY, 201 OLIN LIBRARY CORNELL UNIVERSITY ITHACA, NY 14853, 12 February 2018 (2018-02-12), XP081061540, * page 1 - page 4; figures 1-3 * | 1-15 | INV. G06N3/0464 G06N3/063 |

- - - - -

**TECHNICAL FIELDS SEARCHED (IPC)**

G06N
G06F

The present search report has been drawn up for all claims

| Place of search | Date of completion of the search | Examiner |
|---|---|---|
| The Hague | 19 February 2025 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)